# EUROPEAN PATENT APPLICATION

(11) **EP 4 557 690 A1**
(43) Date of publication of application: **21.05.2025**
(21) Application number: 23845453.2
(22) Date of filing: 21.07.2023
(51) Int. Cl.: H04L 45/24

(54) **DATA TRANSMISSION METHOD, NETWORK DEVICE, COMPUTER DEVICE, AND STORAGE MEDIUM**

(30) Priority: 26.07.2022 CN 202210883874
(71) Applicant: ZTE CORPORATION, Shenzhen, Guangdong 518057 (CN)
(72) Inventor: QIN, Zhen, Shenzhen, Guangdong 518057 (CN)
(74) Representative: Canzler & Bergmeier Patentanwälte Partnerschaft mbB
(86) International application number: PCT/CN2023/108602
(87) International publication number: WO 2024/022243

(57) **Abstract**

Provided in the present disclosure is a data transmission method, which is applied to a first network device. The method comprises: reading data from a memory according to the storage sequence of the data, and storing the data locally; assigning addresses to the data, wherein the addresses represent the reading sequence of the data; assigning each piece of data to one of at least two transmission paths; and for each transmission path, sending, to a second network device and by means of a first data message, data assigned to the transmission path and the address of the data, wherein the address is used for causing the second network device to write the corresponding data into the memory according to the address. Further provided in the present disclosure are a network device, a computer device, and a computer-readable storage medium.

## Description

### CROSS-REFERENCE TO RELATED APPLICATIONS

The present disclosure claims the priority of Chinese Patent Application No. 202210883874.0, filed on July 26, 2022, the contents of which are incorporated herein in their entirety by reference.

### TECHNICAL FIELD

The present disclosure relates to the field of communications technologies, and in particular, to a data transmission method, a network device, a computer device, and a computer-readable storage medium.

### BACKGROUND

RDMA (Remote Direct Memory Access), mainly RoCEv2 (RDMA over Converged Ethernet version 2), is a transport protocol currently widely used in the fields of HPC (High Performance Computing) and large data centers. Due to having advantages of zero copy, kernel Bypass, CPU offloading and the like, compared with Ethernet, RDMA technology achieves higher bandwidth and lower time delay.

Data center traffic engineering puts forward a demand of multipath data transmission. Traffic in a macroscopic data center has obvious characteristics of "big flow and small flow", with high traffic concurrency and traffic burst. The multipath data transmission has following advantages: bandwidth aggregation, throughput improvement; reducing traffic bursts; reducing jitter, quick recovery when the network link is fail, and during such process, impact caused by packet loss due to blockage on one path is reduced, when an original transmission path is unavailable, retransmitting packets are re-routed without waiting for update and convergence of whole network routing. Meanwhile, the data center also provides implementation conditions of multipath data transmission: compared with complex, variable and incompletely controllable heterogeneous network, such as Internet, a data center network is homogeneous network environment under a single autonomous domain, whose end hosts, protocols used by the end hosts, network devices, configuration and the like are relatively controllable and predictable. Homogeneity is represented by fixed regular topologies (such as Fat-tree, VL2), relatively consistent buffer size and link bandwidth, etc.

However, the related RDMA/RoCEv2 does not support multipath data transmission, the difficulty is that transmitting data with multiple paths may result in data packets received by a receiving end being out of order and the out-of-order becoming the norm. In related sequence preservation solutions, the receiving end needs performing buffer sequencing and then writing data, computing resources and storage resources are consumed, and time delay is large. With the increase of network IO (input/output) speed in an order of 10G and 100G series, sequence preservation of linear speed is difficult to achieve.

### SUMMARY

In one aspect, the present disclosure provides a data transmission method, applied to a first network device, including: reading data from a memory according to a storage sequence of the data, and storing the data locally; assigning addresses to the data, where the addresses represent a reading sequence of the data; assigning each piece of the data to one of at least two transmission paths; for each of the transmission paths, sending, through a first data packet, data assigned to the transmission path and addresses of the data to a second network device, where the addresses are used for enabling the second network device to write corresponding data into a memory according to the addresses.

In another aspect, the present disclosure provides a data transmission method, applied to a second network device, including: receiving a first data packet sent by a first network device through at least two transmission paths; acquiring data carried in the first data packet and addresses of the data, where the data is read from a memory by the first network device according to a storage sequence of the data, and the addresses represent a reading sequence of the data; and writing corresponding data into a memory according to the addresses.

In yet another aspect, the present disclosure provides a network device being a first network device, including: a data reading module, an address assignment module, a path assignment module and a data transmission module, where the data reading module is configured to read data from a memory according to a storage sequence of the data, and store the data locally; the address assignment module is configured to assign addresses to the data, where the addresses represent a reading sequence of the data; the path assignment module is configured to assign each piece of the data to one of at least two transmission paths; the data transmission module is configured to, for each of the transmission paths, send, through a first data packet, data assigned to the transmission path and addresses of the data to a second network device, where the addresses are used for enabling the second network device to write corresponding data into a memory according to the addresses.

In still another aspect, the present disclosure provides a network device being a second network device, including: a data transmission module, a data acquisition module, and a data writing module, where the data transmission module is configured to receive a first data packet sent by a first network device through at least two transmission paths; the data acquisition module is configured to acquire data carried in the first data packet and addresses of the data, where the data is read from a memory by the first network device according to a storage sequence of the data, and the addresses represent a reading sequence of the data; the data writing module is configured to write corresponding data into a memory according to the addresses.

In yet still another aspect, the present disclosure provides a computer device, including: at least one processor; and a storage device having at least one computer program stored thereon, wherein the at least one computer program, executed by the at least one processor, causes the at least one processor to implement the data transmission method as described above.

In yet still another aspect, the present disclosure provides a computer-readable storage medium having a computer program stored thereon, the computer program, executed by a processor, causes the processor to implement the data transmission method as described above.

### BRIEF DESCRIPTION OF DRAWINGS

Fig. 1 is a schematic diagram of a data transmission process according to the present disclosure;
Fig. 2 is a schematic diagram of data transmission system architecture according to the present disclosure;
Fig. 3 is a schematic diagram of a data transmission flow with a first network device as an execution subject according to the present disclosure;
Fig. 4 is a schematic diagram of multipath data transmission according to the present disclosure;
Fig. 5 is a schematic diagram of a frame format of a data packet according to the present disclosure;
Fig. 6 is a schematic diagram of a data transmission flow with a first network device as an execution subject according to the present disclosure;
Fig. 7 is a schematic diagram of a data transmission flow with a first network device as an execution subject according to the present disclosure;
Fig. 8 is a schematic diagram of a data transmission flow with a second network device as an execution subject according to the present disclosure;
Fig. 9 is a schematic flowchart of retransmitting data according to the present disclosure;
Fig. 10 is a schematic diagram of a check algorithm in an example according to the present disclosure;
Fig. 11 is a schematic diagram of error-correction coding implemented by using multipath data transmission in an example according to the present disclosure;
Fig. 12 is a schematic structural diagram of a first network device according to the present disclosure;
Fig. 13 is a schematic structural diagram of a first network device according to the present disclosure;
Fig. 14 is a schematic structural diagram of a first network device according to the present disclosure;
Fig. 15 is a schematic structural diagram of a second network device according to the present disclosure;
Fig. 16 is a schematic structural diagram of a second network device according to the present disclosure.

### DETAIL DESCRIPTION OF EMBODIMENTS

Exemplary embodiments are described more fully below with reference to the accompanying drawings, but the exemplary embodiments may be embodied in different forms, and the present disclosure should not be construed as limited to the embodiments set forth herein. The embodiments are provided to make the present disclosure more thorough and complete, and for those skilled in the art more fully understanding the scope of the present disclosure.

As used in the present disclosure, a term "and/or" includes any and all combinations of at least one of listed items.

The terms used in the present disclosure are for a purpose of describing particular embodiments only, and does not limit the present disclosure. As used in the present disclosure, singular forms "a" and "the" include plural forms as well, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

Embodiments of the present disclosure may be described with reference to plan and/or cross-sectional views with the help of idealized schematic illustrations of the present disclosure. Therefore, the example illustrations may be modified in accordance with manufacturing techniques and/or tolerances. Embodiments of the present disclosure are not limited to those shown in the accompanying drawings, but include modifications of any configuration formed based on a manufacturing process. Therefore, areas illustrated in the accompanying drawings have schematic properties, and shapes of the areas illustrated in the accompanying drawings illustrate specific shapes of the areas of elements, but are not limiting.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

There are clear demands and functions for multipath technology, but reality is that the multipath technology is not widely used, such as MPTCP (MultiPath TCP) in TCP (Transmission Control Protocol). Difficulty that the multipath technology is not widely used is not in implementation of multipath spraying transmission of data. In a data center, under conditions of having a homogeneous network and equivalent multi-routes, by modifying port numbers in a transmission flow, and depending on an ECMP (Equal Cost Multi-path) protocol of a switch or a router, data flow can be dispersed to multiple transmission paths without any difficulties or bottlenecks. The difficulty that the multipath technology is not widely used lies in a fact that usage of multiple transmission paths introduces a problem of out-of-order. Since data is transmitted through multiple transmission path, each path has a different delay, and congestion may occur on a certain path, resulting in an increased delay, packets received at a receiving end may be caused to be out of order. The above condition is a low-probability event in single-path data transmission, but in a case of multipath data transmission, out-of-order becomes the norm.

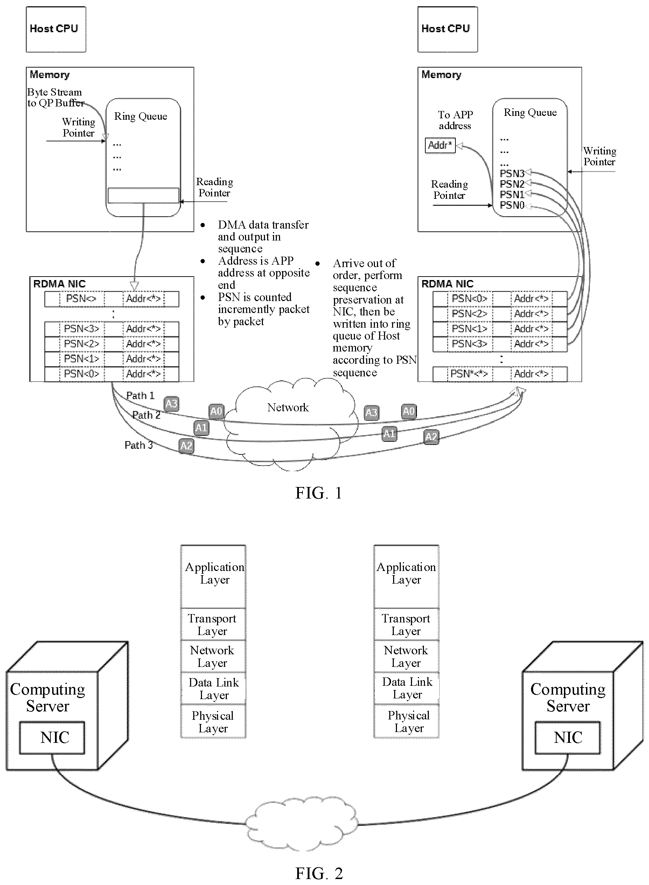

Related data sequence preservation solutions perform a series of processes such as storage, calculation and sequencing according to PSN (Package Sequence Number) in each packet. As shown in Fig. 1, a related data transmission process based on RDMA is as follows: an RDMA NIC (Network Interface Controller, i.e., network card) at a receiving end receives a packet, buffers the packet in a buffer area of the NIC, and then sequences the received packets. If a number N packet is received, then a number N+2 packet and a number N+3 packet are received, and then a number N+1 packet is received, out-of-order occurs. The NIC buffers and sequences the packets to ensure that data written into QP (queue pair) buffer of Host Memory in a DMA (Direct Memory Access) mode is sequenced according to PSNs. Address (Addr) of the data is random and out-of-order, is a certain address where a CPU at a sending end writes data into a memory of the receiving end, and is an address agreed between application layers of the sending end and the receiving end. It can be seen from the above data transmission process that in order to implement data sequence preservation, the NIC of the receiving end needs to buffer data and write the data into the memory after sequencing the data, which consumes computing resources and storage resources, and a data transmission delay is increased due to the waiting in sequencing.

The present disclosure provides a data transmission method, which is applied to a system architecture as shown in Fig. 2. The system architecture includes a first network device and a second network device. The first network device is a device in a data sending end, the second network device is a device in a data receiving end, and the first network device and the second network device may be compute node servers. The first network device accesses network through an RDMA network card, is interconnected to a remote second network device, and performs transmission from 1 to 4 layers of protocols according to OSI (Open System Interconnection Reference Model) layering: physical layer--data link layer (Ethernet)--network layer--transport layer (RDMA). The data transmission method provided in the present disclosure is applied to the transport layer.

RDMA-based data transmission is an end-to-end transmission, a sending end (i.e., the first network device) and a receiving end (i.e., the second network device) each include a CPU processor, DDR memory (Double Data Rate Synchronous Dynamic Random Access Memory), and an RDMA network card, and are connected to the network through Ethernet links (cables or optical cables). In a working process of the RDMA protocol, a piece of space of the DDR memory is occupied to establish a ring queue for buffering data, and a QP pair is formed by the ring queue of the sending end and the ring queue of the receiving end. The CPU at the sending end writes data into the ring queue according to a writing pointer, and the RDMA network card at the sending end reads the data from the ring queue according to a reading pointer. The data is packaged in a form of Ethernet packet and is transmitted in the network. The RDMA network card at the receiving end writes data into the ring queue according to a writing pointer. The CPU at the receiving end reads data from the ring queue according to a reading pointer, thereby completing data transmission from the sending end to the receiving end.

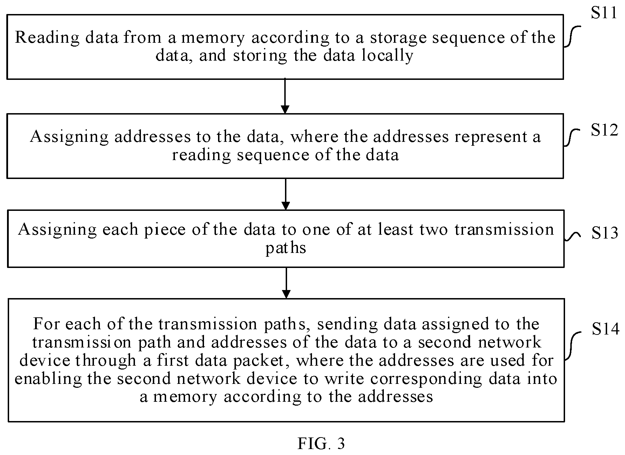

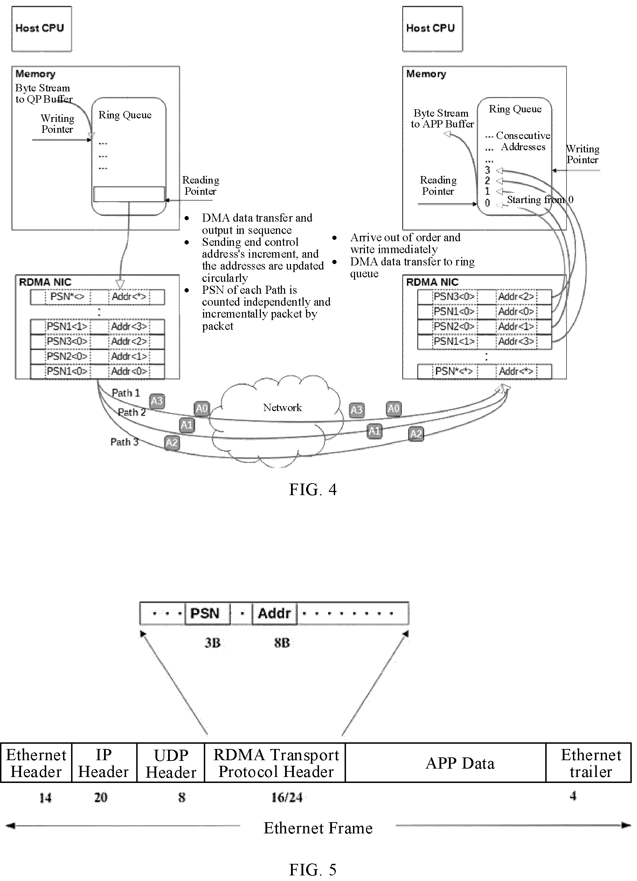

The data transmission method in the present disclosure, is applied to a first network device, with reference to Fig. 3 and 4, and includes following operations S11 to S14.

At operation S11, reading data from a memory according to a storage sequence of the data, and storing the data locally.

An APP (application program) of the first network device writes data to be transmitted into a ring queue of the memory according to a writing pointer, and the writing pointer is increased by 1 each time one address is written with data. In operation S11, a network cart (RDMA NIC) of the first network device reads, in a DMA manner, data from the memory by using a reading pointer according to the storage sequence of the data, and stores read data in a buffer of the RDMA network card.

At operation S12, assigning addresses to the data, where the addresses represents a reading sequence of the data.

In operation S12, the RDMA network card of the first network device performs RDMA protocol processing, and assigns addresses to stored data. The addresses of the data may represent the reading sequence of the data, i.e., the storage sequence of the data in the memory.

At operation S13, assigning each piece of the data to one of at least two transmission paths.

The data transmission method provided in the present disclosure is applied to a multipath transmission scenario, i.e., the data is transmitted through multiple transmission paths. In operation S13, the RDMA network card of the first network device assigns the data with an assigned address to one of the transmission paths to transmit the data and the address of the data through the transmission path.

At operation S14, for each of the transmission paths, sending, through a first data packet, data assigned to the transmission path and addresses of the data to a second network device, where the addresses are used for enabling the second network device to write corresponding data into a memory according to the addresses.

In operation S14, the RDMA network card of the first network device performs protocol header package to generate the first data packet carrying the data and the addresses of the data. A frame format of the first data packet is shown in Fig. 5, and includes, from outside to inside, from a lower layer to an upper layer, fields of an Ethernet header, an IP (Internet Protocol) header, a UDP (User Datagram Protocol) header, an RDMA transport protocol header, application data, and an Ethernet trailer. The UDP header field carries a UDP port number, and Fig. 4 shows 3 transmission paths, three different UDP port numbers may be filled in the UDP header field; the IP header field may include an IP address, an Ethernet frame field; the RDMA transport protocol header includes a PSN field of 3 Bytes (i.e., 24 bits) and an address field of 8 Bytes (i.e., 64 bits), and in the RDMA transport protocol, a value of the PSN field is increased by 1 each time a sending end sends one data packet. The value of the PSN field increases in sequence. After the RDMA network card of the first network device performs packet package according to the above frame format, a packaged first data packet is sent to the second network device through the network.

In a transmission process of the data, because the UDP port numbers are different, when a switch performs ECMP for distributing route, the data is assigned to different transmission paths, so that multipath transmission is achieved, and finally the data is transmitted to the receiving end. Due to different transmission paths, the packets arrived at the second network device of the receiving end are out of order. The second network device may write corresponding data into the memory according to addresses, so that data sequence preservation is achieved.

The data transmission method provided in the present disclosure, is applied to the first network device, and includes: reading data from a memory according to a storage sequence of the data, and storing the data locally; assigning addresses to the data, where the addresses represent a reading sequence of the data; assigning each piece of the data to one of at least two transmission paths; for each of the transmission paths, sending, through a first data packet, data assigned to the transmission path and addresses of the data to a second network device, where the addresses are used for enabling the second network device to write corresponding data into a memory according to the addresses. In the data transmission method provided in the present disclosure, there is no need to perform data sequence preservation and reassembly, thus huge consumption of computing resources and storage resources caused by the data sequence preservation and reassembly are avoided, the multipath data transmission can be achieved costless, data center traffic engineering is supported, network congestion is reduced, the network delay is reduced, and thus improve network bandwidth.

In some implementations, the assigning addresses to the data (i.e., operation S12) includes: assigning consecutive addresses to the data. By assigning consecutive addresses to the data, it is convenient for the receiving end (the second network device) to store the data into the memory, and data reading and writing efficiency is improved.

In some implementations, the addresses are virtual addresses starting from 0, so that there is no need to perform address negotiation between the sending end (the first network device) and the receiving end (the second network device), network signaling interaction can be reduced, and a communication link establishment process can be accelerated.

In some implementations, in a case where the addresses are starting form 0, the addresses of the data increase incrementally according to the reading sequence of the data from first to last, i.e., the RDMA network card of the first network device reads data from the memory former and performs address assignment on the data, the address assigned to the data is relatively small, the RDMA network card of the first network device reads data from the memory later and performs address assignment on the data, and the address assigned to the data is relatively large. As shown in Fig. 4, a reading sequence of four data from first to last is: PSN1<0>, PSN2<0>, PSN3<0> and PSN1<1>, and accordingly, addresses assigned to the four data are: Addr<0>, Addr<1>, Addr<2>, Addr<3>, i.e., the addresses of the data increase incrementally.

In some implementations, the addresses are ring queue addresses, that is, the addresses assigned to the data are circular addresses, the address is refreshed circularly, and then re-start from a starting address again after one circle. The ring queue addresses are ring queue addresses of the memory of the second network device, and the second network device writes the data into a ring queue of the memory according to the ring queue addresses. In the present disclosure, the memory of the first network device also stores data by using a ring queue, and the data is read from the ring queue of the memory and stored in the RDMA network card.

In the related process of RDMA-based data transmission, when one packet is lost or there is an error in packet check, for example, the receiving end first receives a packet with PSN=n, and then receives packets with PSN=n+2 and subsequent packets, the receiving end may wait until a packet with PSN=n+1 arrives, and then write data into the memory in sequence according to PSN to ensure a sequence of the data. If the packet with the PSN=n+1 is not received within a time window, the previously received packet with the PSN=n+2 and subsequent packets are discarded, and the sending end is informed to start retransmission from the packet with the PSN=n+1. Because a storage space of the RDMA network card is very small, generally in MB level, and a buffer time window is small, it is easy to retransmit a large amount of packet, and a bandwidth utilization rate is reduced.

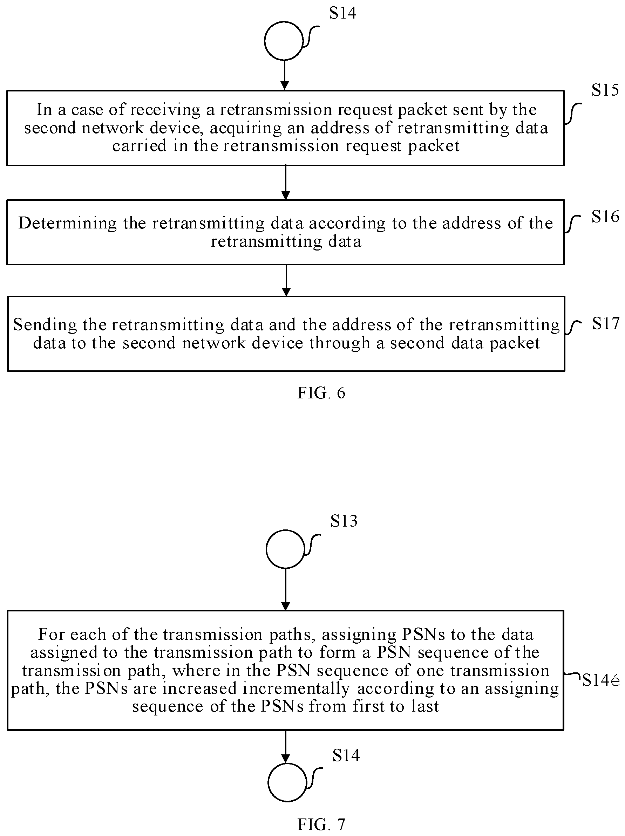

In some implementations, as shown in Fig. 6, after for each of the transmission paths, sending, through a first data packet, data assigned to the transmission path and addresses of the data to a second network device (i.e., operation S14), the data transmission method further includes following operations S15 to S17.

At operation S15, in a case of receiving a retransmission request packet sent by the second network device, acquiring an address of retransmitting data carried in the retransmission request packet.

At operation S16, determining the retransmitting data according to the address of the retransmitting data.

Since the addresses has already been assigned to the read data in operation S12, in operation S16, after acquiring the address of retransmitting data, the data corresponding to the address can be determined, and the data is the retransmitting data, i.e., the data to be retransmitted to the second network device.

At operation S17, sending the retransmitting data and the address of the retransmitting data to the second network device through a second data packet.

It can be seen from operations S15 to S17 that, in the data transmission method provided in the present disclosure, for specific data, e.g., lost data and data with a check error, targeted retransmission is performed, i.e., the data is selectively and accurately retransmitted, so as to improve the bandwidth utilization rate. Moreover, in a case where data is received abnormally, the receiving end does not wait for receiving packets which are not received before in a current time window, and the network delay can be further reduced.

In some implementations, as shown in Fig. 7, after assigning each piece of the data to one of at least two transmission paths (i.e., operation S13), and before for each of the transmission paths, sending, through a first data packet, data assigned to the transmission path and addresses of the data to a second network device (i.e., operation S14), the data transmission method further includes following operation S14'.

At operation S14', for each of the transmission paths, assigning PSNs to the data assigned to the transmission path to form a PSN sequence of the transmission path, where in the PSN sequence of one transmission path, the PSNs are increased incrementally according to an assigning sequence of the PSNs from first to last.

For each of transmission paths, one PSN sequence is maintained separately, PSN sequences of different transmission paths are independent of each other. In one PSN sequence, a PSN assigned former is relatively small and a PSN assigned later is relatively large. As shown in Fig. 4, there are three transmission paths: path1, path2 and path3, PSN sequences corresponding to the three transmission paths respectively are: PSN1<>, PSN2<>, PSN3<>, each PSN sequence is composed of a plurality of PSNs, and each PSN corresponds to one data transmitted on a corresponding transmission path. As shown in Fig. 4, there are 4 data: PSN1<0>, PSN2<0>, PSN3<0> and PSN1<1>, and PSN1<0> and PSN1<1> are transmitted on path1, PSN2<0> is transmitted on path2, and PSN3<0> is transmitted on path3. Addresses assigned to the 4 data are respectively: Addr<0>, Addr<1>, Addr<2>, Addr<3>. The transmission paths assigned to the 4 data are: data corresponding to Addr<0> is transmitted on path1, and corresponds to the PSN sequence PSN1<>; data corresponding to Addr<1> is transmitted on path2, and corresponds to the PSN sequence PSN2<>; data corresponding to Addr<2> is transmitted on path3, and corresponds to the PSN sequence PSN3<>; data corresponding to Addr<3> is transmitted on path1, and corresponds to the PSN sequence PSN1<>. For each of transmission paths, PSNs are assigned to data in the PSN sequence of the transmission path, and assuming that the PSNs are starting from 0, the PSN assigned to the data corresponding to Addr<0> is 0, so as to obtain PSN1<0>; the PSN assigned to the data corresponding to Addr<1> is 0, so as to obtain PSN2<0>; the PSN assigned to the data corresponding to Addr<2> is 0, so as to obtain PSN3<0>; the PSN assigned to the data corresponding to Addr<3> is 1, so as to obtain PSN1<1>.

In the present disclosure, the transmission form may be block data transmission or byte stream transmission.

In the form of the block data transmission, sequence of the addresses may be ensured by APP, and the transport layer RDMA removes operations of PSN counting and sequence preservation, i.e., characteristics of APP data are identified, and block data is transmitted. It should be noted that, the block data transmission does not conflict with the sequence preservation achieved by storing data according to addresses in the data transmission scheme of the present disclosure, that is, in the process of implementing data transmission, the data may be transmitted in the form of the block data.

In the form of the byte stream transmission, the data is a consecutive string with a sequential order, and is unstructured and has no address position information. The addresses in the packet are defined as addresses of a QP cache queue. A RDMA network card of the second network device performs mapping on the addresses, and provides an opposite end (the sending end) with a memory space with consecutive addresses starting from 0. The packet sent by the first network device carries addresses, and the addresses are sequentially increased in order. The second network device receives packets from multiple transmission paths in an out-of-order manner, and writes data directly into the memory according to the addresses carried in the packets. If packet loss is detected, an address of a lost packet is fed back to the first network device, and the first network device only retransmits a packet of the address, so that selective and accurate data retransmission is realized. It should be noted that, in a scenario of multiple paths of RDMA-based data transmission, if the form of the byte stream transmission is adopted, the above-mentioned scheme of the present disclosure can be adopted to implement sequence preservation. Consecutiveness of addresses may be guaranteed by the APP or by the RDMA NIC, and implementations are chosen according to the characteristics of the APP data.

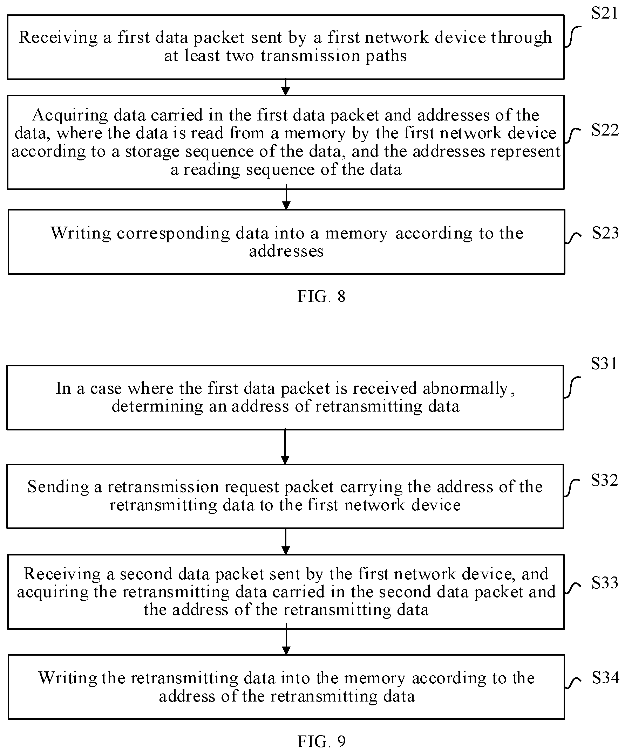

The present disclosure provides a data transmission method, applied to a second network device, as shown in Fig. 8, including following operations S21 to S23.

At operation S21, receiving a first data packet sent by a first network device through at least two transmission paths.

In operation S21, the RDMA network card of the second network device receives the first data packet sent by the first network device through a network by using multiple transmission paths, respectively, and the received packets are out of order.

At operation S22, acquiring data carried in the first data packet and addresses of the data, where the data is read from a memory by the first network device according to a storage sequence of the data, and the addresses represent a reading sequence of the data.

In operation S22, the RDMA network card of the second network device performs a series of operations on the first data packet, such as de-packaging protocol header, removing an Ethernet frame field, removing an IP field, recovering UDP port number (i.e., a port number specified by APP and determined in a negotiation stage), so as to obtain the data carried in the first data packet and the addresses of the data.

At operation S23, writing corresponding data into a memory according to the addresses.

In operation S23, the RDMA network card of the second network device performs RDMA protocol processing, writes data into a ring queue of the memory in a DMA manner, and a writing pointer indicates the addresses of the data. The second network device does not wait, acquires the address carried in the first data packet whenever the first data packet arrives, and writes the corresponding data into the memory according to the address, that is, the data is not written into the memory sequentially.

The data transmission method provided in the present disclosure, is applied to the second network device, includes: receiving a first data packet sent by a first network device through at least two transmission paths; acquiring data carried in the first data packet and addresses of the data, where the data is read from a memory by the first network device according to a storage sequence of the data, and the addresses represent a reading sequence of the data; and writing corresponding data into a memory according to the addresses. In the data transmission method provided in the present disclosure, there is no need to perform data sequence preservation and reassembly, thus huge consumption of computing resources and storage resources caused by the data sequence preservation and reassembly are avoided, the multipath data transmission can be achieved costless, data center traffic engineering is supported, network congestion is reduced, the network delay is reduced, and thus improve network bandwidth.

In some implementations, the addresses are consecutive addresses.

In some implementations, the addresses are virtual addresses starting from 0, the addresses of the data increase incrementally according to the reading sequence of the data from first to last.

In some implementations, writing corresponding data into a memory according to the addresses (i.e., operation S23) includes following operation: writing the corresponding data into a ring queue of the memory according to the addresses. Since the addresses assigned by the first network device to the data are ring queue addresses, in the operation, the data can be directly written into the ring queue of the memory according to the addresses.

It should be noted that, after the data is written into the memory, the data transmission method further includes following operation: the APP reads data from the ring queue of the memory according to a reading pointer, and the reading pointer is increased by 1 each time the data of one address is read, i.e., the data is read according to the storage sequence.

In some implementations, as shown in Fig. 9, after the receiving a first data packet sent by a first network device through at least two transmission paths (i.e., operation S21), the data transmission method further includes following operations S31 to S34.

At operation S31, in a case where the first data packet is received abnormally, determining an address of retransmitting data.

That the first data packet being received abnormally includes: the first data packet is not received within a preset time length, or a received first data packet is checked to be wrong.

In operation S31, when the RDMA network card of the second network device determines that the first data packet is received abnormally, data abnormally transmitted and an address of the data are determined, the data abnormally transmitted is the retransmitting data. For example: if a first data packet of a certain address is not received within a time limit, or if the first data packet is received but an error occurs when three-layer protocol processes CRC (Cyclic Redundancy Check) on an IP packet, the first data packet is discarded, which indicates that the first data packet is received abnormally, and the data carried in the first data packet is to be retransmitted, the data is the retransmitting data.

At operation S32, sending a retransmission request packet carrying the address of the retransmitting data to the first network device.

At operation S33, receiving a second data packet sent by the first network device, and acquiring the retransmitting data carried in the second data packet and the address of the retransmitting data.

The second data packet is sent after the first network device determines corresponding data according to the address of the retransmitting data.

At operation S34, writing the retransmitting data into the memory according to the address of the retransmitting data.

In operation S34, the RDMA network card of the second network device performs RDMA protocol processing, and writes the retransmitting data into the ring queue of the memory in a DMA manner.

It can be seen from operation S31 to S34 that, in the data transmission method provided in the present disclosure, for specific data, e.g., lost data and data with a check error, targeted retransmission is performed, i.e., the data is selectively and accurately retransmitted, so as to improve the bandwidth utilization rate. Moreover, in a case where data is received abnormally, the receiving end does not wait for receiving packets which are not received before in a current time window, and the network delay can be further reduced.

RDMA is a transport protocol operated by a memory, and is used to write/read data to/from a given address. Based on the characteristic, in the data transmission method provided in the present disclosure, by designing the addresses to have sequentiality, out-of-order reception of data packets on multiple transmission paths is achieved, and the data is written into the memory according to the addresses, sequence preservation is realized, heavy reliance on and consumption of computing resources and storage resources caused by re-sequencing and calculating according to PSN are avoided. In the data transmission method provided in the present disclosure, by carrying the addresses of the data in a RDMA data packet, sequence preservation is realized by utilizing consecutiveness of the addresses. It should be noted that, transport protocols such as TCP and QUIC (Quick UDP Internet Connection), are used for transmitting meaningless string stream without addresses, and thus the solution of the present disclosure cannot be applied.

The RDMA transport protocol supports multipath data transmission, and the data transmission method provided in the present disclosure can be applied in scenes using the RDMA transport protocol, and is particularly suitable for a scene of services desiring large bandwidth, or services with flow burst, or services with high reliability. The data transmission method provided in the present disclosure is realized based on multiple transmission paths, provides a basis for many other technologies, such as AR/VR/XR video communication service of real-time communication adopting multipath transmission, and can combine network error correction coding.

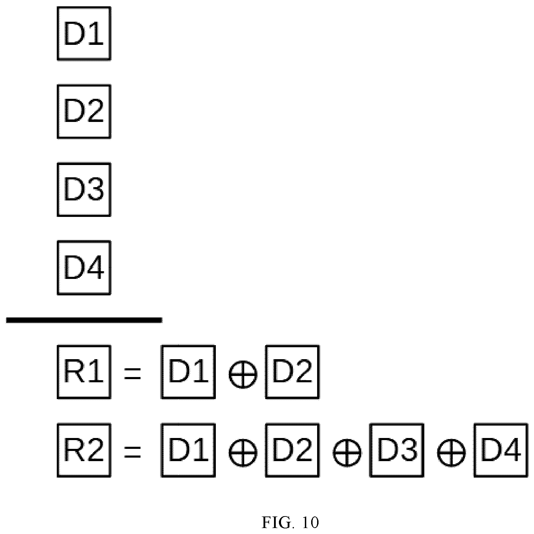

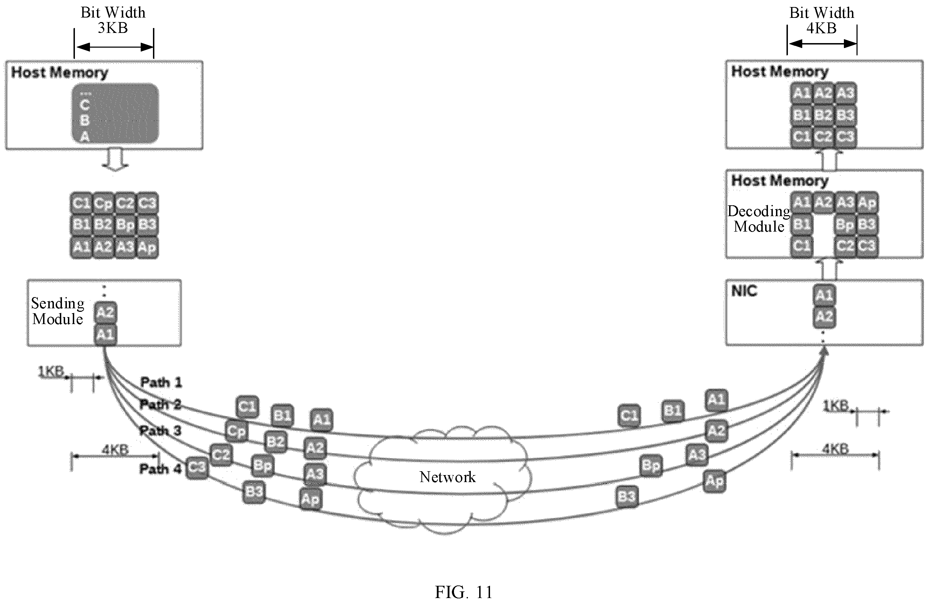

In order to describe the solution of the present disclosure clearly, taking a specific example in a scenario of transmitting video data through multiple transmission paths and performing error correction coding, the data transmission method is described in detail below with reference to Fig. 10 and 11.

Due to high flux and strong real-time performance of video data, the multipath technology is used when the video data are transmitted, and effects of bandwidth aggregation and avoiding congestion can be achieved. Combined with network error correction coding, reliability can be improved, one path of data transmission has errors and can be recovered without retransmission, and the real-time performance is further ensured.

Related network error correction coding, taking UlpFEC (Uneven Level Protection Forward Error Correction) used in RTP (Real-time Transport Protocol) as an example, desires forward and backward correlation calculation. An XOR operation is performed on a group of M packets to generate N (N represents redundancy of FEC) FEC packets, and the N FEC packets are packaged and transmitted. Even if any N packets in the group of packets are discarded, the group can be recovered through (M-N) packets together with FEC redundant packets. As shown in Fig. 10, D is a media packet, a number of the media packet is M=4, R is a redundant packet, and redundancy shown in Fig. 10 is 2, i.e., N=2.

The related network error correction coding has following problems: in network transmission, if a switch on a certain path is congested or a routing failure is being repaired, these processes usually take a long time, generally in units of seconds. Then, when packet loss occurs to the data packets, it is not often just a single data packet having problems, but all packets in a period of time having problems, and 1 second corresponds to 100 ten thousand packets by calculating at a line speed of 10GE and 1KB for each packet. The error correction coding is to perform correlation and XOR operation on forward and backward data packets, redundancy is at most at a K-level length, with a difference of three orders of magnitude. Therefore, error correction coding tends to fail, which is also a main reason why network error correction coding is not widely adopted.

Data transmission by multiple transmission paths provides conditions for error correction coding. If one certain transmission path has fault, a series of packet errors and losses occur, whose result is the same as that of single-path transmission. However, by array coding, the packet is striped, and is distributed to different transmission paths, data of one transmission path may be recovered through data check of other transmission paths, and packets on one transmission path having errors continuously does not cause failure of data transmission. Moreover, coding can be realized by only a simple coding manner such as RAID 5 (Redundant Array of Independent Disks Level 5 for Distributed Parity) without complex forward and backward correlation calculation, so that computational complexity can be reduced, occupied bandwidth is small, and time delay is low.

A coding module divides data to be transmitted into n data, and calculates and generates 1 check data according to a check algorithm. A transmission module assigns the data into n+1 transmission paths for transmission according to the method described above. A receiving end receives data from each of the transmission paths and converts the data into one frame of data.

Taking the check algorithm being a simple RAID 5 algorithm as an example: p=D1 xor D2 xor D3 ... xor Dn, D1, D2 and D3 ... Dn are data blocks, P is a check block, and xor is XOR operation. Assuming that data of a certain one transmission path is lost or has errors (which can be determined by CRC check and layer 4 TCP in IP packet, RDMA transport protocol check mechanism), lost or erroneous data can be recovered.

With reference to Fig. 11, a process of combining multiple transmission paths with error correction coding is described below by taking n=3 as an example. As shown in Fig. 11, at a sending end, data streams of an application layer form each byte stream with a data bit width of 3KB, a network card performs striping coding on data and generates check data, A, B, C ... representing data streams.

Data packets are sent to a network in a frame format of an Ethernet packet shown in Fig. 5 through a sending module, and each data packet carries 1KB payload data. In the network, four transmission paths (path1 to path4) are used for transmitting data. Assuming that the transmission path2 has errors, data packets B2 and Cp are lost consecutively.

A network card (NIC) at a receiving end receives out-of-order data packets, does not perform excessive buffering and ordering, and sends the data packets to a decoding module of a host, and the decoding module may recover data through calculation, for example, A=A1+A2+A3, B=B1+B2+B3, ....... After the data is recovered, the data is stored into the memory according to addresses.

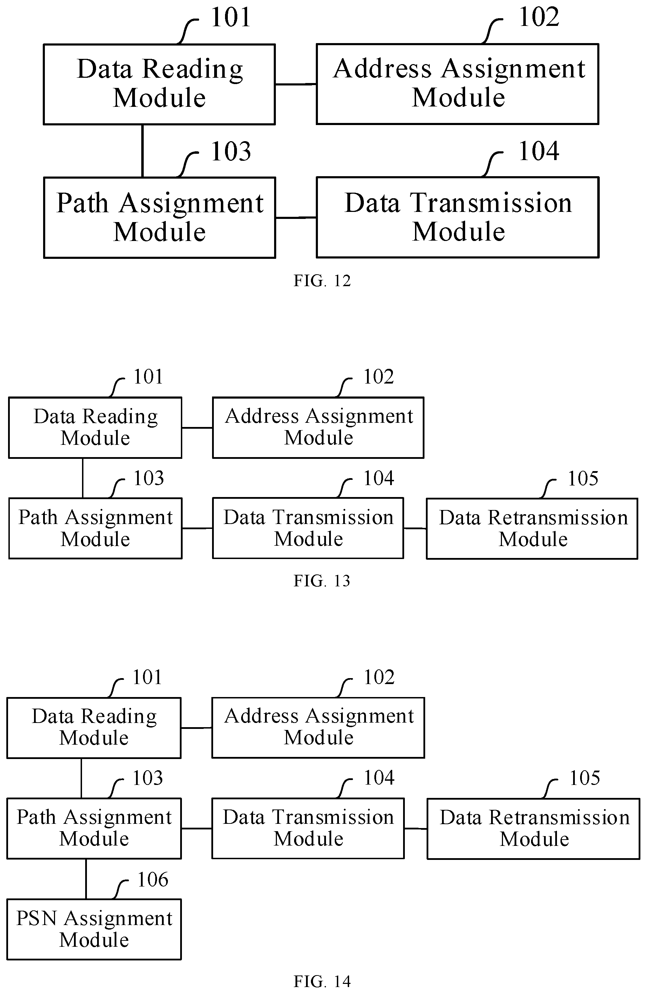

Based on the same technical concept, the present disclosure further provides a network device, which is a first network device, as shown in Fig. 12, including a data reading module 101, an address assignment module 102, a path assignment module 103 and a data transmission module 104.

The data reading module 101 is configured to read data from a memory according to a storage sequence of the data, and store the data locally.

The address assignment module 102 is configured to assign addresses to the data, where the addresses represent a reading sequence of the data.

The path assignment module 103 is configured to assign each piece of the data to one of at least two transmission paths.

The data transmission module 104 is configured to, for each of the transmission paths, send, through a first data packet, data assigned to the transmission path and addresses of the data to a second network device, where the addresses are used for enabling the second network device to write corresponding data into a memory according to the addresses.

In some implementations, the address assignment module 102 is configured to assign consecutive addresses to the data.

In some implementations, the addresses are virtual addresses starting from 0, the addresses of the data increase incrementally according to the reading sequence of the data from first to last.

In some implementations, the addresses are ring queue addresses.

In some implementations, as shown in Fig. 13, the network device further includes a data retransmission module 105 configured to, after for each of the transmission paths, data assigned to the transmission path and addresses of the data are sent to the second network device through the first data packet, in a case of receiving a retransmission request packet sent by the second network device, acquire an address of retransmitting data carried in the retransmission request packet; determine the retransmitting data according to the address of the retransmitting data; and send the retransmitting data and the address of the retransmitting data to the second network device through a second data packet.

In some implementations, as shown in Fig. 14, the network device further includes a PSN assignment module 106 configured to, after each piece of the data are assigned to one of at least two transmission paths, and before for each of the transmission paths, data assigned to the transmission path and addresses of the data are sent to the second network device through the first data packet, for each of the transmission paths, assign PSNs to the data assigned to the transmission path to form a PSN sequence of the transmission path, where in the PSN sequence of one transmission path, the PSNs are increased incrementally according to an assigning sequence of the PSNs from first to last.

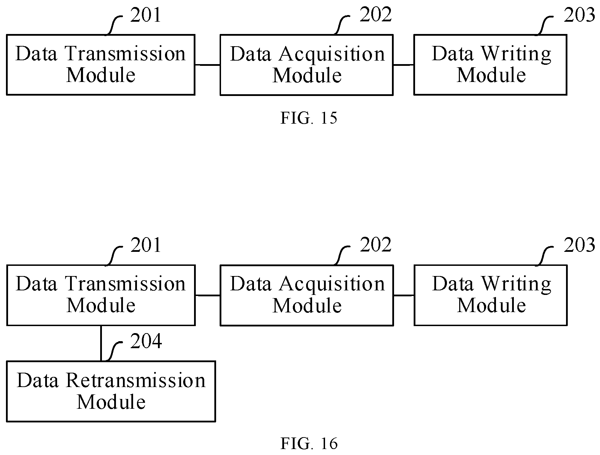

Based on the same technical concept, the present disclosure further provides a network device, which is a second network device, as shown in Fig. 15, including a data transmission module 201, a data acquisition module 202, and a data writing module 203.

The data transmission module 201 is configured to receive a first data packet sent by a first network device through at least two transmission paths.

The data acquisition module 202 is configured to acquire data carried in the first data packet and addresses of the data, where the data is read from a memory by the first network device according to a storage sequence of the data, and the addresses represent a reading sequence of the data.

The data writing module 203 is configured to write corresponding data into a memory according to the addresses.

In some implementations, the addresses are consecutive addresses.

In some implementations, the addresses are virtual addresses starting from 0, the addresses of the data increase incrementally according to the reading sequence of the data from first to last.

In some implementations, the data writing module 203 is configured to write the corresponding data into a ring queue of the memory according to the addresses.

In some implementations, as shown in Fig. 16, the network device further includes a data retransmission module 204 configured to, after the first data packet sent by the first network device is received through at least two transmission paths, in a case where the first data packet is received abnormally, determine an address of retransmitting data.

The data transmission module 201 is further configured to send a retransmission request packet carrying the address of the retransmitting data to the first network device; and receive a second data packet sent by the first network device.

The data acquisition module 202 is further configured to acquire the retransmitting data carried in the second data packet and the address of the retransmitting data.

The data writing module 203 is further configured to write the retransmitting data into the memory according to the address of the retransmitting data.

The present disclosure further provides a computer device, including: at least one processor; and a storage device having at least one computer program stored thereon, where the at least one computer program, executed by the at least one processor, causes the at least one processor to implement the data transmission method as described above.

The present disclosure further provides a computer-readable storage medium having a computer program stored thereon, the computer program, executed by a processor, causes the processor to implement the data transmission method as described above.

It should be understood by those of ordinary skill in the art that all or some of the operations, the functional modules/components in the apparatuses in the method applied above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be allocated on a computer-readable medium, the computer-readable medium may include computer storage medium (or non-transitory medium) and communication medium (or transitory medium). As known to those skilled in the art, the term of the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present disclosure provides the exemplary embodiments, and although specific terms are used, they are used and should only be interpreted in a generic and descriptive meaning and not for purposes of a limitation. In some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A data transmission method, applied to a first network device, comprising:
reading data from a memory according to a storage sequence of the data, and storing the data locally;
assigning addresses to the data, wherein the addresses represent a reading sequence of the data;
assigning each piece of the data to one of at least two transmission paths; and
for each of the transmission paths, sending, through a first data packet, data assigned to the transmission path and addresses of the data to a second network device, wherein the addresses are used for enabling the second network device to write corresponding data into a memory according to the addresses.

2. The method of claim 1, wherein assigning addresses to the data comprises:
assigning consecutive addresses to the data.

3. The method of claim 2, wherein the addresses are virtual addresses starting from 0, the addresses of the data increase incrementally according to the reading sequence of the data from first to last.

4. The method of claim 2, wherein the addresses are ring queue addresses.

5. The method of claim 1, further comprising:
after for each of the transmission paths, sending, through a first data packet, data assigned to the transmission path and addresses of the data to a second network device, in a case of receiving a retransmission request packet sent by the second network device, acquiring an address of retransmitting data carried in the retransmission request packet;
determining the retransmitting data according to the address of the retransmitting data; and
sending, through a second data packet, the retransmitting data and the address of the retransmitting data to the second network device.

6. The method of any of claims 1 to 5, further comprising:
after assigning each piece of the data to one of at least two transmission paths, and before for each of the transmission paths, sending, through a first data packet, data assigned to the transmission path and addresses of the data to a second network device, for each of the transmission paths, assigning package sequence numbers (PSNs) to the data assigned to the transmission path to form a PSN sequence of the transmission path, wherein in the PSN sequence of one transmission path, the PSNs are increased incrementally according to an assigning sequence of the PSNs from first to last.

7. A data transmission method, applied to a second network device, comprising:
receiving a first data packet sent by a first network device through at least two transmission paths;
acquiring data carried in the first data packet and addresses of the data, wherein the data is read from a memory by the first network device according to a storage sequence of the data, and the addresses represent a reading sequence of the data; and
writing corresponding data into a memory according to the addresses.

8. The method of claim 7, wherein the addresses are consecutive addresses.

9. The method of claim 8, wherein the addresses are virtual addresses starting from 0, the addresses of the data increase incrementally according to the reading sequence of the data from first to last.

10. The method of claim 8, wherein writing corresponding data into a memory according to the addresses comprises:
writing the corresponding data into a ring queue of the memory according to the addresses.

11. The method of any of claims 7 to 10, further comprising:
after receiving a first data packet sent by a first network device through at least two transmission paths, in a case where the first data packet is received abnormally, determining an address of retransmitting data;
sending a retransmission request packet carrying the address of the retransmitting data to the first network device;
receiving a second data packet sent by the first network device, and acquiring the retransmitting data carried in the second data packet and the address of the retransmitting data; and
writing the retransmitting data into the memory according to the address of the retransmitting data.

12. A network device being a first network device, comprising: a data reading module, an address assignment module, a path assignment module and a data transmission module, wherein
the data reading module is configured to read data from a memory according to a storage sequence of the data, and store the data locally;
the address assignment module is configured to assign addresses to the data, wherein the addresses represent a reading sequence of the data;
the path assignment module is configured to assign each piece of the data to one of at least two transmission paths;
the data transmission module is configured to, for each of the transmission paths, send, through a first data packet, data assigned to the transmission path and addresses of the data to a second network device, wherein the addresses are used for enabling the second network device to write corresponding data into a memory according to the addresses.

13. A network device being a second network device, comprising: a data transmission module, a data acquisition module, and a data writing module, wherein
the data transmission module is configured to receive a first data packet sent by a first network device through at least two transmission paths;
the data acquisition module is configured to acquire data carried in the first data packet and addresses of the data, wherein the data is read from a memory by the first network device according to a storage sequence of the data, and the addresses represent a reading sequence of the data;
the data writing module is configured to write corresponding data into a memory according to the addresses.

14. A computer device, comprising:
at least one processor; and
a storage device having at least one computer program stored thereon, wherein
the at least one computer program, executed by the at least one processor, causes the at least one processor to implement the data transmission method of any one of claims 1 to 11.

15. A computer-readable storage medium having a computer program stored thereon, wherein the computer program, executed by a processor, causes the processor to implement the data transmission method of any one of claims 1 to 11.
